# EUROPEAN PATENT APPLICATION

(11) **EP 3 300 447 A1**
(43) Date of publication of application: **28.03.2018**
(21) Application number: 16190557.5
(22) Date of filing: 26.09.2016
(51) Int. Cl.: H04W 76/02, H04W 76/04, H04W 76/06, H04W 88/06

(54) **A CONNECTION MANAGER, A METHOD OF CONTROLLING A CONNECTION MANAGER, AND A MOBILE COMMUNICATIONS DEVICE**

(71) Applicant: Intel IP Corporation, Santa Clara, CA 95054 (US)
(72) Inventor: Parron, Jerome, 90762 Fürth (DE)
(74) Representative: Viering, Jentschura & Partner mbB Patent- und Rechtsanwälte

(57) **Abstract**

A mobile communications device, a connection manager, and a method for controlling the connection manager, the method including: determining whether a first connection for a first subscriber identity module can be communicated over at least one of a first radio technology and a second radio technology, wherein the first radio technology is different from the second radio technology, and determining whether a second connection for a second subscriber identity module can be communicated over at least one of the first radio technology and the second radio technology; selecting one of the first radio technology or the second radio technology for transfer of data on the first connection based on the determinations for the first connection and the second connection; and selecting the other of the first radio technology or the second radio technology for transfer of data on the second connection based on the selection for the first connection.

## Description

### Technical Field

Various embodiments relate generally to a connection manager and a method of controlling a connection manager.

### Background

Mobile communication devices including multiple subscriber identity modules (SIMs) and at least a dual cellular receiver may encounter situations where the mobile communications device may be requested to simultaneously perform services for more than one SIM. For example, an ongoing service for one SIM, e.g., a voice call, may be interrupted by an incoming call for another SIM. If the mobile communications device only has a single transmitter, arbitration between the services for the two SIMs may be required to determine which service has priority between the two. One of the services, therefore, may be dropped or interrupted in favor of the other, which may negatively affect a user experience of the mobile communications device.

Alternatively, the mobile communications device may have multiple cellular transmitters to simultaneously accommodate the performance of multiple cellular services. However, such implementations may be costly. Accordingly, it may be advantageous to utilize alternative radio communication technologies, e.g., non-cellular radio technologies, which may already be incorporated in the mobile communications device, to perform simultaneous services for multiple SIMs.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a mobile communications device with multiple radio technologies.
FIG. 2 shows a mobile communications device including a connection manager.
FIG. 3A and 3B show a mobile communications device including a connection manager.
FIG. 4 shows a method for controlling a connection manager.
FIG. 5 shows a core network diagram and a mobile communications device connected to a second radio technology.
FIG. 6 shows a message sequence chart of a PDN offload.
FIG. 7 shows a message sequence chart of a PDN offload.
FIG. 8 shows a message sequence chart of a PDN offload.
FIG. 9 shows a network a network diagram and a mobile communications device connected to a second radio technology.
FIG. 10 shows a message sequence chart of an LWA service.
FIG. 11 shows a message sequence chart of an LWA service.
FIG. 12 shows a message sequence chart of an LWA service.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" may be understood as any kind of logic (analog or digital) implementing entity, which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as, for example, Java. Any other kind of implementation of the respective functions which will be described in more detail below may also be understood as a "circuit". It is understood that any two (or more) of the described circuits may be combined into a single circuit with substantially equivalent functionality, and, conversely, that any single described circuit may be distributed into two (or more) separate circuits with substantially equivalent functionality. In particular with respect to the use of "circuitry" in the Claims included herein, the use of "circuit" may be understood as collectively referring to two or more circuits.

A "processing circuit" (or equivalently, "processing circuitry") as used herein, is understood as referring to any circuit that performs an operation(s) on signal(s), such as, e.g., any circuit that performs processing on an electrical signal or an optical signal. A processing circuit may thus refer to any analog or digital circuitry that alters a characteristic or property of an electrical or optical signal, which may include analog data, digital data, or a combination thereof. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g., a processor or microprocessor). As utilized herein, "digital processing circuit(ry)" may refer to a circuit implemented using digital logic that performs processing on a signal, e.g., an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term "memory". It is appreciated that a single component referred to as "memory" or "a memory" may be composed of more than one different type of memory, and thus may refer to a collective component including one or more types of memory. It is readily understood that any single memory component may be separate multiple collectively equivalent memory components, and vice versa. Furthermore, it is appreciated that while memory may be depicted, such as in the drawings, as separate from one or more other components, it is understood that memory may be integrated within another component, such as on a common integrated chip.

As used herein, a "cell", in the context of telecommunications, may be understood as a sector served by a base station. Accordingly, a cell may be a set of geographically co-located antennas that correspond to a particular sector of a base station. A base station may thus serve one or more "cells" (or "sectors"), where each cell is characterized by a distinct communication channel. A "serving cell" may be understood as a "cell" that a user equipment (UE) is currently connected to according to the mobile communications protocols of the associated mobile communications network standard. Furthermore, the term "cell" may be utilized to refer to any of a macrocell, microcell, picocell, or femtocell, etc.

The term "base station", used in reference to an access point of a mobile communications network, may be understood as a macro-base station, micro-base station, Node B, evolved Node B (eNodeB, eNB), Home eNodeB, Remote Radio Head (RRH), or relay point, etc.

As used herein, "data transfer" may be used in reference to the transmission and reception of data packets. The data may include any type of user requested and / or produced information, e.g., voice calls, such as voice over IP (VoIP) and voice over LTE (VoLTE); images, music or other audio files, webpages, software, applications, etc., which may be contrasted to radio technology control signals or information associated with the physical signal layer control and configuration.

As used herein, a "cellular radio technology" may be a Cellular Wide Area radio communication technology, which may include, e.g., a Global System for Mobile Communications (GSM) radio communication technology, a General Packet Radio Service (GPRS) radio communication technology, an Enhanced Data Rates for GSM Evolution (EDGE) radio communication technology, and / or a Third Generation Partnership Project (3GPP) radio communication technology (e.g., UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System-Time-Division Duplex), TD-CDMA (Time Division-Code Division Multiple Access), TD-CDMA (Time Division-Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)).

As used herein, a "short range radio technology" may include, e.g., a Worldwide Interoperability for Microwave Access (WiMax) (e.g., according to an IEEE 802.16 radio communication standard, e.g., WiMax fixed or WiMax mobile), WiPro, HiperMAN (High Performance Radio Metropolitan Area Network), IEEE 802.16m Advanced Air Interface, a Bluetooth radio communication technology, e.g., Bluetooth Low Energy Long Range, an Ultra-Wide Band (UWB) radio communication technology, and / or a Wireless Local Area Network radio communication technology (e.g., according to an IEEE 802.11 (e.g., IEEE 802.11n) radio communication standard)), IrDA (Infrared Data Association), Z-Wave and ZigBee, HiperLAN/2 ((HIgh PErformance Radio LAN; an alternative ATM-like 5 GHz standardized technology), IEEE 802.11a (5 GHz), IEEE 802.11g (2.4 GHz), IEEE 802.11n, and IEEE 802.11VHT (VHT=Very High Throughput).

It is to be noted the ensuing description discusses utilization of the mobile communications device under 3GPP (Third Generation Partnership Project) specifications, notably Long Term Evolution (LTE) and Long Term Evolution-Advanced (LTE-A). Other mobile radio communications systems, however, may be used, where applicable. The examples provided herein can apply to other existing, or other not yet formulated standards, so long as they share the underlying features disclosed in the following examples.

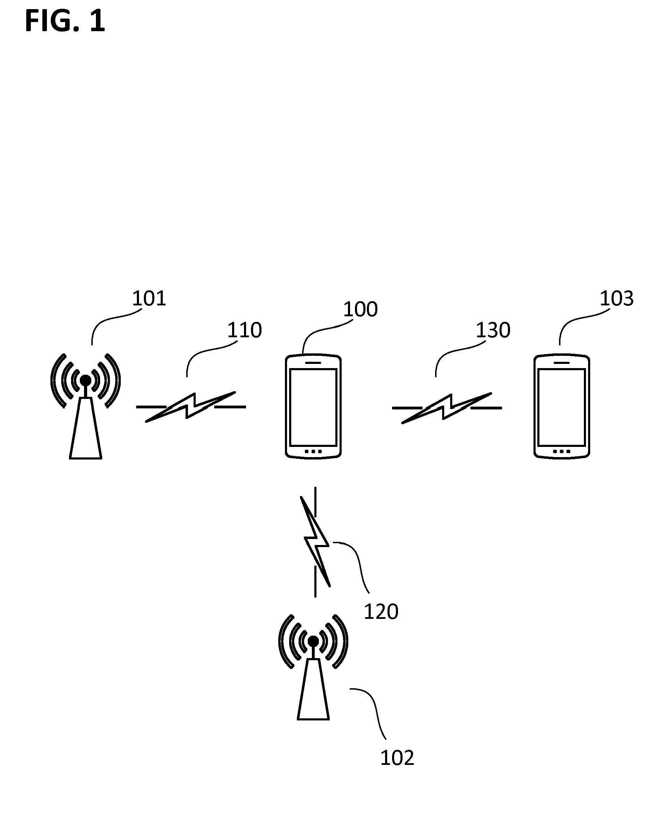

As shown in FIG. 1, a mobile communications device 100 may be able to communicate over multiple radio technologies. For example, mobile communication device 100 may have a first connection 110 to a first radio technology 101, a second connection 120 to a second radio technology 102, a connection 130 to a third radio technology 103, and any combination thereof. Although three radio technologies are depicted in FIG. 1, mobile communications device 100 may support any two or more radio technologies. Each radio technology may be different.

An example scenario in which mobile communications device 100 has access to multiple radio technologies is commonplace today, e.g., at home, in the work place, commercial centers, transportation centers, public transportation, etc. For example, the first radio technology 101 may be a cellular radio technology, e.g., a cellular radio technology, wherein mobile communication device 100 is connected to a base station, e.g., an eNodeB, of the cellular radio technology network. The second radio technology 102 may be a short range radio technology, e.g., WiFi, WLAN (wireless local area network), and mobile communication device 100 is connected to an access point (AP) of the short range radio network. Finally, the third radio technology may be another short range radio technology, e.g., Bluetooth, and mobile communication device 100 is connected to another device utilizing the same radio technology.

Accordingly, mobile radio communications device 100 may leverage multiple available radio technologies to perform simultaneous services, e.g., simultaneous services for multiple SIMs. Therefore, mobile communications device 100 may include an architecture that determines if a certain service, or connection, may be communicated over any one or more available radio technologies and effect a handover of a data connection from one radio technology to another, as will be discussed below.

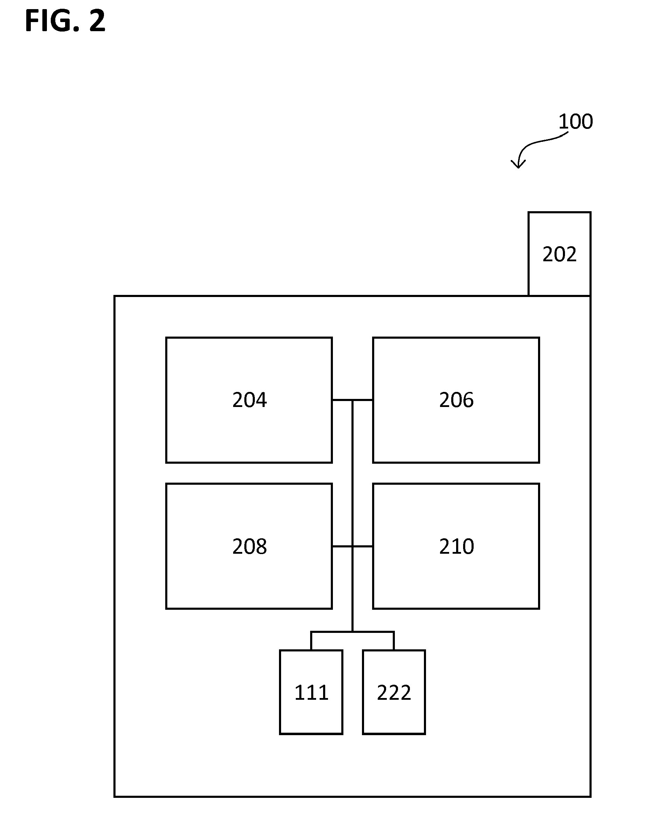

As shown in FIG. 2, mobile communications device 100 may include a connection manager 210 to manage and control multiple connections, as described in scenarios above. In addition, mobile communications device 100 may include an antenna 202, a first transceiver 204 configured to operate a first radio technology 101, a second transceiver 206 configured to operate a second radio technology 102, a processor 208, e.g., a processing circuit, a first SIM 111, and a second SIM 222.

Antenna 202 may be a single antenna or an antenna array. In addition, antenna 202 may be configured to operate the first radio technology 101 and the second radio technology 102 (or additional radio technologies), or antenna 202 may include one or more antennas for each respective radio technology in mobile communications device 100.

First transceiver 204 and second transceiver 206 may be respectively configured for different radio technologies. First transceiver 204 may include at least two receivers, and may have only one transmitter, so that first transceiver 204 may be able to receive data for two connections, but unable to maintain two connections that may each require constant access to the transmitter, e.g., a voice call may require exclusive use of the transmitter. Accordingly, first transceiver 204 may be configured to receive a first connection 110 for the first SIM 111 and also a second connection 120 for the second SIM 222. For example, the first connection 110 may be ongoing while the second connection 120 may be subsequently received at the first transceiver 204, or vice-versa. Similarly, the first connection 110 and the second connection 120 may be received at the first transceiver simultaneously. First transceiver 204 and second transceiver 206 may include or may also be a cellular baseband modem, which may process, e.g., modulate and demodulate information for transportation as wireless signals.

First SIM 111 and second SIM 222 may be configured to operate on the same network or may be configured to operate on different networks, e.g., first SIM 111 may operate on one public land mobile network (PLMN), whereas second SIM 222 may operate on a different PLMN.

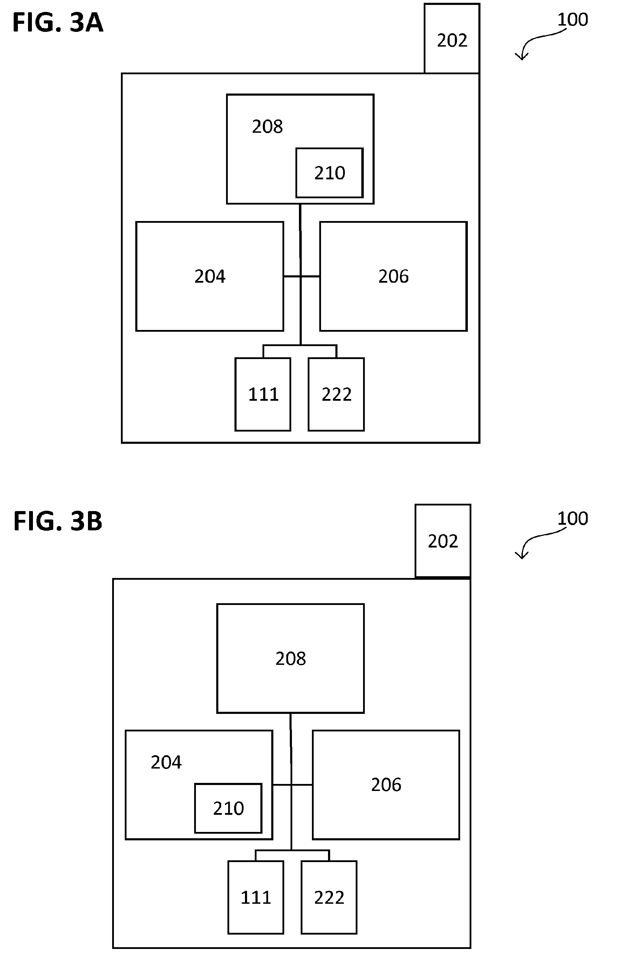

Connection manager 210 may be implemented as a standalone circuit in mobile communications device 100 or as part of another circuit. As may be seen in FIG. 3A, connection manager 210 may be implemented as a part of processor 208, for example, as a circuit integrated into processor 208 or as instructions executed by processor 208. Alternatively, as may be seen in FIG. 3B, connection manager 210 may be implemented as part of first transceiver 204, e.g., as a circuit integrated into first transceiver 204 or as instructions executed by first transceiver 204.

Connection manager 210 may be configured to determine whether the first connection 110 for the first SIM 111 can be communicated over at least one of the first radio technology 101 and the second radio technology 102 and also determine whether the second connection 120 for the second SIM 222 can be communicated over at least one of the first radio technology 101 and the second radio technology 102. Then, connection manager 210 may be further configured to select one of the first radio technology 101 or the second radio technology 102 for transfer of data on the first connection 110 based on the determinations for the first connection 110 and the second connection 120, i.e., based on the determinations of which radio technologies are viable for data transfer of each respective connection. The other of the first radio technology 101 or the second radio technology 102 may be selected by the connection manager 210 for transfer of data on the second connection 120 based on the selection for the first connection 110. Accordingly, one of the first connection 110 or the second connection 120 may be handed over from the first radio technology 101 to the second radio technology 102.

For example, the connection manager 210 may determine the first connection 110 may only be able to be communicated over the first radio technology 101, while the second connection 120 may be able to be communicated over both the first radio technology 101 and the second radio technology 102. Connection manager 210 may then select the first radio technology 101 for the first connection 110, as it may only be communicated over the first radio technology 101, while the second radio technology 102 may be selected for the second connection 120, as the selection arrangement would allow both connections to be performed simultaneously.

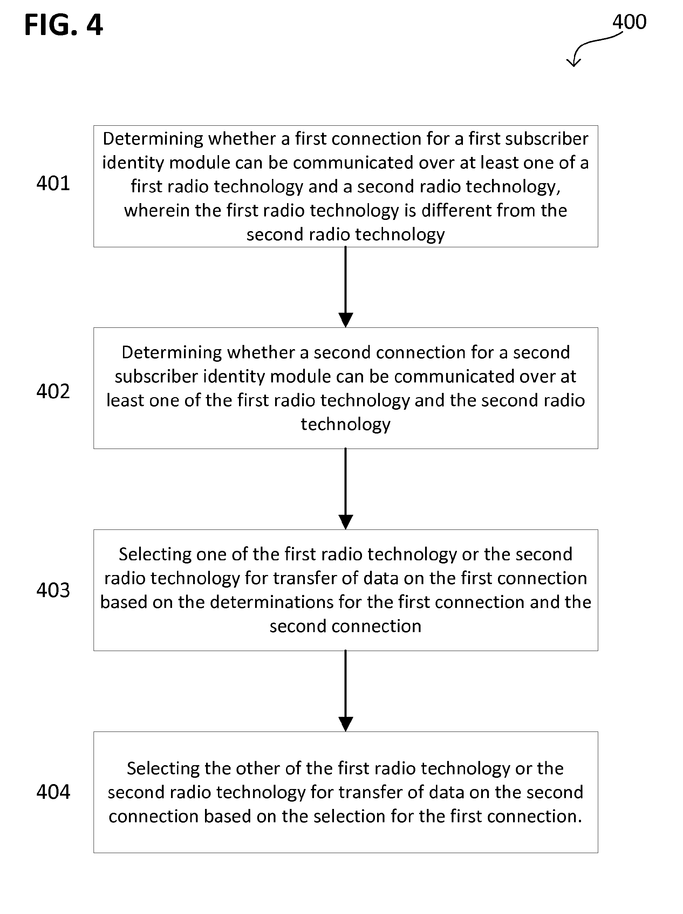

FIG. 4 shows a method 400 for controlling connection manager 210. The method 400 may include: in 401, determining whether a first connection for a first subscriber identity module can be communicated over at least one of a first radio technology and a second radio technology, wherein the first radio technology is different from the second radio technology, and, in 402, determining whether a second connection for a second subscriber identity module can be communicated over at least one of the first radio technology and the second radio technology; in 403, selecting one of the first radio technology or the second radio technology for transfer of data on the first connection 110 based on the determinations for the first connection and the second connection 120; and, in 404, selecting the other of the first radio technology or the second radio technology for transfer of data on the second connection based on the selection for the first connection. Method 400 may further include other steps consistent with the aspects of this disclosure. In addition, method 400 may be implemented by any means consistent with this disclosure that may perform the functions of method 400.

The selection of the radio technologies for the respective connections may be based on a predetermined criteria, i.e., based on the predetermined criteria, the first connection 110 or the second connection 120 may have priority (or a preference) over the other connection. The predetermined criteria plays a role when the first connection 110 and the second connection 120 may both be communicated over the first radio technology 101 and the second radio technology 102. For example, if a situation arises where the first connection 110 and the second connection 120 may only be communicated on different radio technologies (assuming that multiple radio technologies are available and the mobile communications device 100 is able to communicate over the multiple radio technologies), the predetermined criteria need not play a role. In addition, the predetermined criteria may be used when the first connection 110 and the second connection 120 may only communicate over the same radio technology, i.e., a decision must be made which connection to maintain and which connection should be dropped.

The predetermined criteria may be based on at least one of: an application source of the first connection 110 or the second connection 120 (e.g., one application may have a higher preference over another application, such as a voice call application over a photograph upload application or other types of service); a signal quality (e.g., the connection with a higher signal strength may have priority over a connection with lower signal strength, or selection may be based on achieving a minimum signal strength for both connections via the radio technologies); a Quality of Service (QoS) (e.g., a guaranteed bit rate, connection establishment delay, etc.); an expected power consumption (e.g., one arrangement of connections may be calculated to consume less power, and thus reduce battery drainage); a user preference (e.g., a user of the mobile communication device 100 may be able to determine what types of connection have preference over others); and a network operator preference (e.g., a PLMN operator may be able to determine which types of connections have preference over others). This list of predetermined criteria is not meant to be exhaustive, but merely exemplary.

In addition, if the second radio technology 102 becomes unavailable or unviable after the selection of radio technologies for the first connection 110 and the second connection 120, the predetermine criteria may be used to determine which of the first connection 110 or the second connection 120 should utilize the first radio technology 101. Accordingly, if the connection on the second radio technology 102 has a higher priority than the connection on the first radio technology 101, the ongoing connection on the first radio technology 101 may be ended and the higher priority connection transferred to the first radio technology 101, as will be described in more detail below.

For further optimization, connection manager 210 may be configured to maintain a database of locations where successful activation of the second radio technology 102 has occurred, e.g., LWA activation, discussed below, in order to reduce service interruptions on an active data transfer connection. For example, connection manager 210 may store these locations in a memory. The locations may be based on a location identifier, e.g., GPS coordinates, a base station identifier, an access point identifier, or any combination of location identifiers. Connection manager 210 may attempt to make use of secondary radio technologies 102 only in known locations where the second radio technology 102 has already been activated, and which may be stored in a database in a memory located in mobile communications device 100 or accessible by mobile communications device 100, for example, from a network of the first radio technology 101.

Additionally or alternatively, connection manager 210 may store other locations, in which it has been determined the second radio technology 102 is unavailable or connection manager 210 has unsuccessfully attempted to transfer first connection 110 or second connection 120 to the second radio technology 102. In such locations, connection manager 210 may suspend determinations of whether first connection 110 or second connection 120 may communicate over first radio technology 101 and second radio technology 102. Arbitration, for example, based on the predetermined criteria, to select which of the first connection 110 or second connection 120 may communicate over the first radio technology 101 may be performed by connection manager 210.

In many situations, mobile communications device 100 may have access to a cellular radio technology, e.g., an LTE network, and a short range radio technology, e.g., WLAN. Generally, connection manager 210 may determine if a connection can access a cellular operator's core network via a non-cellular radio technology. The connection manager 210 then determines the appropriate connection configuration and radio bearer configuration to perform uplink (data transfer from mobile communication device 101 to another device) data service for one connection to use the cellular radio technology and the short range radio technology for the other connection. The methods required to manage the connection, radio connection, and signaling to access the operator's core network using another radio technology, such as short range radio technology, depends on the particular short range radio technology or protocol, e.g., PDN (packet data network) offload in an LTE network, LTE-WLAN Aggregation (LWA), and LTE WLAN Radio Level Integration with IPsec Tunnel (LWIP), etc. Based on the framework discussed above, various aspects of the disclosure will be discussed in terms of these radio technologies in greater detail below. For example, mobile communications device 100 may utilize PDN offload, LWA, or LWIP of cellular originated connections to enable data transfer (e.g., voice services, data streaming, data upload, data download) in parallel for multiple SIMs, when mobile communications device 100 may not have enough available cellular transmitters for each connection.

In overview, connection manager 210 may perform a PDN offload consistent with aspects described above in the following. Mobile communications device 100 may detect WLAN coverage, and for the connections of each respective SIM, determine if the core network is reachable via an evolved packet data gateway (ePDG). If the connections may be performed simultaneously (i.e., if the cellular services for each SIM may be executed in parallel for each of the SIMs, and the ePDG is available for at least one SIM), one of the connections may be offloaded to WLAN. Likewise, if the ePDG is reachable for both connections (e.g., for each SIM), the predetermined criteria may be used to determine which connection (e.g., PDN connection) is offloaded. If the WLAN connection is lost (e.g., moving outside of the coverage area of an access point), the connections for each SIM (i.e., the running services) are evaluated for priority (e.g., based on the predetermined criteria). The connection for the SIM that has a higher priority is maintained and the connection for the other SIM is aborted and the corresponding radio connection is closed. If the connection with the highest priority is on the WLAN connection in this situation, it may be handed over to the cellular connection.

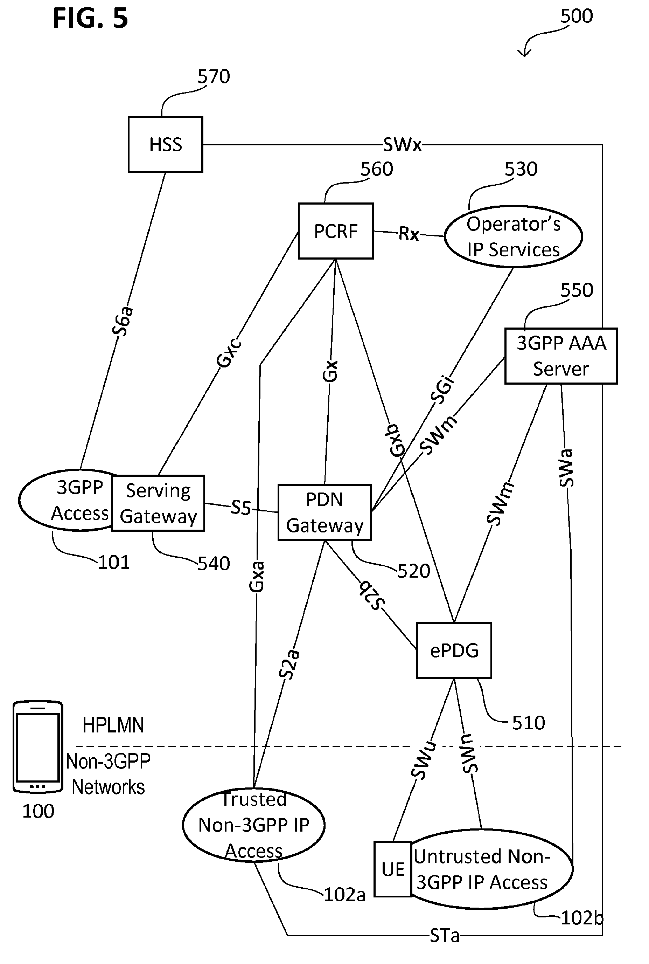

FIG. 5 shows a core network diagram 500 for purposes of illustrating a PDN offload. Core network diagram 500 may be an evolved packet core (EPC) according to SAE architecture of 3GPP standards, e.g., 3GPP TS 23.402, v14.0.0, June 22, 2016. Above the dashed line, mobile communications device 100 may have access to a home PLMN, e.g., a cellular radio technology, while below the dashed line, mobile communications device 100 may have access to a short range radio technology. Mobile communication device 100 may be able to access the PLMN operator's IP services 530 via the short range radio technology.

The components of core network diagram 500 include: ePDG 510 (enhanced packet data gateway); PDN gateway 520; operator's IP services 530 (e.g., IP Multimedia Subsystem (IMS), Primary Synchronization Signals (PSS), etc.); serving gateway 540; 3GPP AAA server 550; and PCRF 560 (policy and changing rules function node). Also depicted are the various interfaces between the components of core network diagram 500.

Mobile communications device 100 may communicate with the operator IP service 530 via multiple connection routes. For example, the first radio technology 101 may be cellular 3GPP access and the second radio technology 102 may be either trusted non-3GPP IP access 102a (e.g., an access point where connectivity is predicated on authorized access via a SIM) or untrusted non-3GPP IP access 102b (e.g., over an unaffiliated WLAN connection).

In an aspect of the disclosure, the non-3GPP IP access source may be untrusted, e.g., mobile communication device 100 may detect WLAN coverage. Connection manager 210 may determine for a connection initiated on the first radio technology, e.g., a cellular radio technology, if a cellular PDN connection can be offloaded via WLAN by performing ePDG 510 discovery for the corresponding SIM, e.g., first SIM 111. If ePDG 510 is reachable for the SIM, the PDN connection may be offloaded to WLAN.

Similarly, in a simultaneous connection scenario, connection manager 210 may discover (e.g., determine) if the ePDG 510 is available for the first connection 110 and the second connection 120 (or the requisite number of connections). If it is determined the ePDG 510 is available for both connections, as an example, the initial or currently running service, e.g., the first connection 110, over the cellular radio technology may be maintained and a new service request for the second connection 120 is setup over WLAN after offloading (e.g., handing over) the second connection 120 to WLAN. If both connections are determined to have access to the ePDG 510, the predetermined criteria may be used to determine a priority between the connections. If only one connection may be offloaded to WLAN, that particular connection may be selected for handover to WLAN, while the connection determined not to have access to ePDG 510 may be maintained on the first radio technology 101. Finally, if PDN offload is unavailable for any connection, legacy arbitration may occur to determine which connection should be maintain and which connection should be dropped, e.g., based on the predetermined criteria. Likewise, after a PDN offload, if WLAN coverage is lost, the connection with the highest priority is selected to be maintained and may be handed over to the first radio technology 101 or simply remain on the first radio technology 101 while the second connection 120 may be aborted.

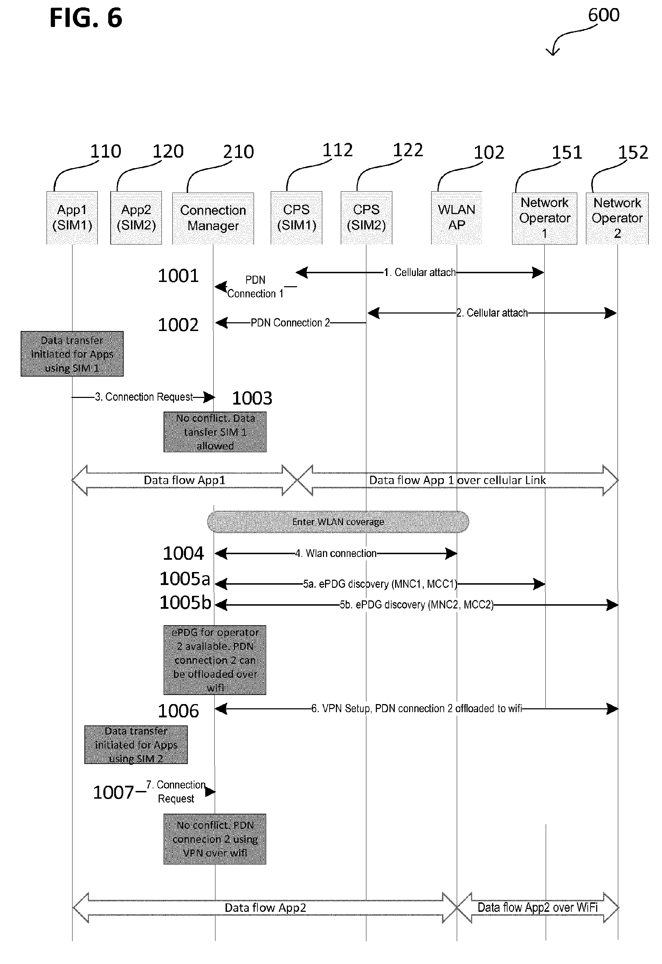

FIG. 6 may show a message sequence chart 600 of PDN offload in an aspect of the disclosure. Here a cellular radio technology is used as an exemplary first radio technology 101 and WLAN is used as an exemplary second radio technology 102. The components in chart 600 may include first connection 110 (e.g., an application performing a service via first SIM 111); second connection 120 (e.g., an application performing a service via second SIM 222); connection manager 210; cellular protocol stack (CPS) 112 for first SIM 111; CPS 122 for second SIM 222; second radio technology 102 (e.g., a WLAN access point); a first network operator 151 associated with first SIM 111; and a second network operator 152 associated with second SIM 222.

As shown in step 1001 and step 1002, mobile communication device 100 may attach via first SIM 111 and CPS 112 to the first network operator 151 and via second SIM 222 and CPS 122 to second network operator 152, respectively. PDN connections for first SIM 111 and second SIM 222 may be established with connection manager 210, i.e., connection manager 210 may request CPS 112 or CPS 122 to establish the PDN connection or the PDN connection, overseen by connection manager 210, may be allocated during the initial attach procedure of CPS 112 for first SIM 111 and CPS 122 for second SIM 222.

In step 1003, a connection request for an application (or applications) for first SIM 111, i.e., for first connection 110, may be initiated. Connection manager 210 may additionally be configured to perform standard arbitration tasks, and may determine there is no conflict for the first connection 110, thus allowing data transfer to be communicated over the cellular radio technology for the first connection 110. The data is communicated between the application for the first connection 110 to the cellular protocol stack 112 and on to the first network operator 151.

In step 1004, mobile communications device 100 may enter WLAN coverage, and attach to a WLAN access point. In steps 1005a and 1005b, connection manager 210 may determine if the ePDG is reachable for the first network operator 151 and the second network operator 152 using, for example, the mobile country code (MCC) and mobile network code (MNC) from the SIMs. Determination if the ePDG is reachable for each SIM (e.g., if communications of a first radio technology may be transferred over a second radio technology) may be performed before first connection 110 and second connection 120 are established, or alternatively, simultaneous to establishment of the first connection 110 and the second connection 120. As an example, connection manager 210 may determine the ePDG is reachable for the second network operator 152 and second SIM 222.

In step 1006, the second connection 120 may be offloaded to WLAN, and a virtual private network (VPN) may be setup to the ePDG of the second network operator 152. In step 1007, a connection request for an application (or applications) for second SIM 222, i.e., for second connection 120, may be initiated. Connection manager 210 may determine there are no conflicts and data may be transferred over WLAN using the VPN to the second network operator 152. The first connection 110 and the second connection 120 may perform services in parallel.

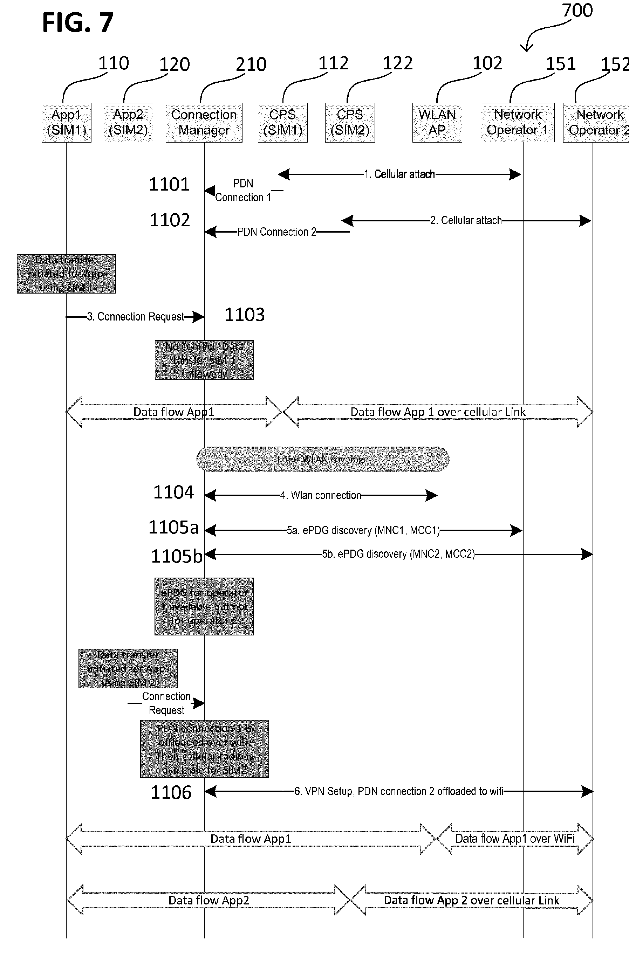

FIG. 7 shows message sequence chart 700 of PDN offload in an aspect of the disclosure. Here a cellular radio technology is used as an exemplary first radio technology 101 and WLAN is used as an exemplary second radio technology 102. Steps 1101 to 1104 may be the same as steps 1001 to 1004 in FIG. 6 above, however, beginning at step 1105, chart 700 may differ from that of chart 600. In step 1105a and step 1105b, it may be determined the ePDG for first connection 110 (with an ongoing data transfer, see step 1003) is available, but not for second connection 120. Accordingly, first connection 110 is offloaded to WLAN, and a virtual private network (VPN) may be setup to the ePDG of the first network operator 151, whereupon data transfer for the first connection 110 may resume. Data transfer for second connection 120 may be communicated over the cellular radio technology in step 1106.

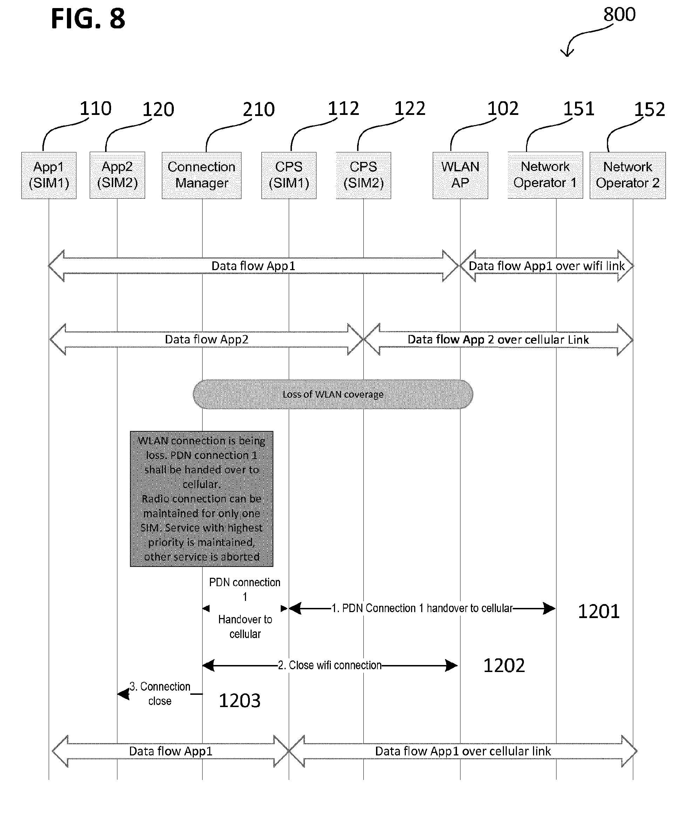

FIG. 8 shows a message sequence chart 800 showing PDN offload when WLAN becomes unavailable in an aspect of the disclosure. Here a cellular radio technology is used as an exemplary first radio technology 101 and WLAN is used as an exemplary second radio technology 102. Data transfer for first connection 110 may be communicated over WLAN and data transfer for second connection 120 may be communicated over the cellular radio technology. During the data transfer, WLAN coverage may be lost or may be diminishing, e.g., mobile communications device 100 may move outside of a coverage area of a WLAN access point. Connection manager 210 may determine which of the first connection 110 or the second connection 120 may have the highest priority, and thus, maintain that connection, e.g., here, first connection 110 may be selected which is currently communicating over the second radio technology 102.

In step 1201, the PDN connection of first connection 110 is handed over to the cellular radio technology, and the WLAN attachment is ended in step 1202. In step 1203 the second connection 120 data transfer on the cellular radio technology is stopped so that data transfer for first connection 110 may be communicated over the cellular radio technology.

In another aspect of the disclosure, LWA or LWIP services (e.g., according to 3GPP TS 36.300, v13.4.0, July 7, 2016, and TS 36.331, v13.2.0, July 11, 2016) may be examples where a cellular radio technology and WLAN may be utilized to maintain multiple connections. Connection manager 210 may utilize LWA or LWIP services. LWA allows control signaling to be performed over a cellular radio technology using radio resource control (RRC) protocols, while data transfer may be performed over WLAN or a combination of the cellular radio technology and WLAN, i.e., control signaling for the transfer of data over WLAN may be communicated over the cellular radio technology. LWIP methods may be similar to the LWA methods discussed below, with the exception that LWIP may not have parallel transmission capabilities over the cellular radio technology and WLAN.

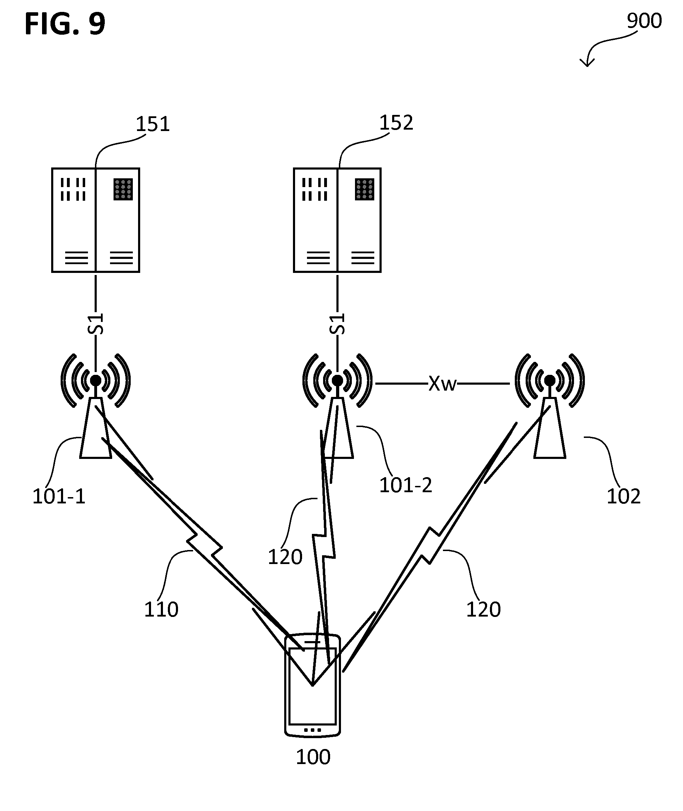

As shown in FIG. 9, network diagram 900 depicts mobile communication device 100 in a LWA service scenario. Via a cellular radio technology, mobile communication device 100 may be connected to a base station 101-1 of first operator network 151 via first SIM 111 and may be connected to a base station 101-2 of second operator network 152 via second SIM 222. First connection 110 may thus be communicated over the cellular radio technology. Second connection 120 may be connected via an LWA service to base station 101-2 and a WLAN access point.

Discussed here in overview, if a service is already running for first SIM 111, first connection 110 is an active LWA connection, and an additional service request for another SIM is received by mobile communication device 100, connection manager 210 may control the LWA service. For example, if the uplink LWA data split is controlled by mobile communication device 100, connection manager 210 will change the data transfer routing policy to send all data for first connection 110 using LWA over WLAN. Alternatively, if the uplink LWA data split is controlled by a base station, e.g., an eNode B, mobile communications device 100 may send a request to the base station to reconfigure the uplink split ratio (e.g., data transfer routing policy) of mobile communications device 100 to have all data transferred using LWA over WLAN. Once the LWA data split is reconfigured to be sent over WLAN, second connection 120 may communicate data over the cellular radio technology (which may include periodic interruptions to allow for signaling for the LWA connection of the first connection 110).

In another example, LWA may not be active for the first SIM 111 and the first connection 110 may be communicated solely over the first radio technology 101; in addition, another service request for another SIM is received may be received by mobile communication device 100. Connection manager 210 may determine if the other service request, e.g., second connection 120, may be communicated over LWA. Therefore, connection manager 210 may request the CPS 112 temporarily suspend first connection 110. Then, CPS 122 for the second SIM 222 may be allowed to setup an RRC connection with a base station 101-2 to configure WLAN measurement reports and determine if WLAN access points for LWA are available. If WLAN access points for LWA are available, the WLAN measurement may be sent to the base station 101-2 and LWA configuration may be done upon request to the base station 101-2. Data transfer may be communicated over WLAN for second connection 120 via LWA, and data transfer for first connection 110 may be resumed on the cellular radio technology.

If LWA cannot be used for the second connection 120, connection manager 120 may arbitrate and determine a priority between the first connection 110 and the second connection 120, e.g., based on the predetermined criteria discussed above. Accordingly, the connection with the highest priority may be communicated on the cellular radio technology, while the other connection may be terminated.

As briefly discussed above, control signaling for LWA (e.g., WLAN measurement reports or WLAN connection status, etc.) may still be performed over the cellular radio technology using RRC protocols. The connection on the cellular radio technology may need to be periodically suspended for short periods of time to perform the LWA control signaling related to the other connection.

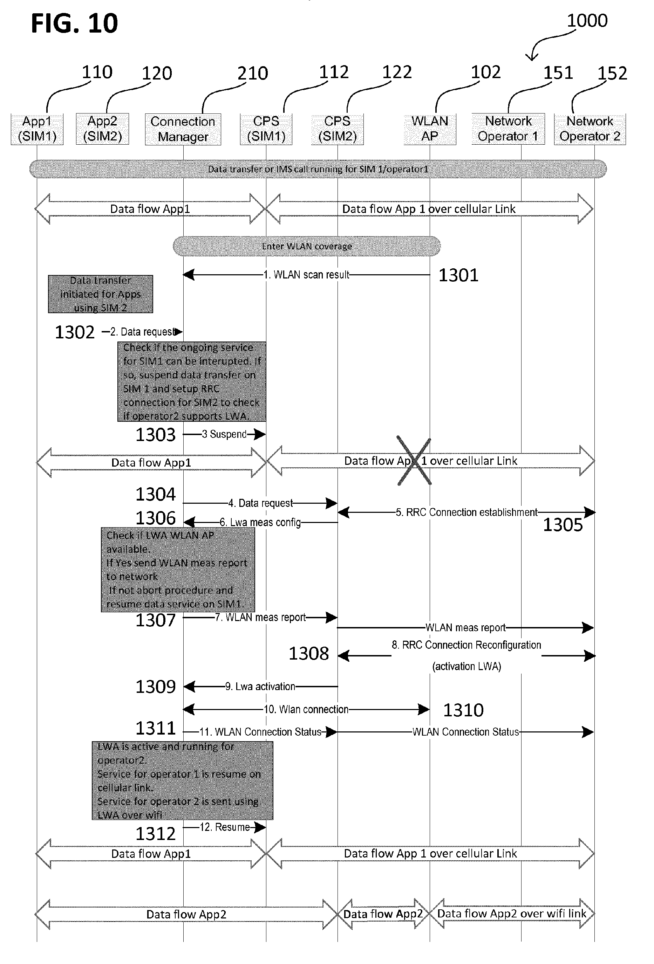

FIG. 10 shows message sequence chart 1000 depicting LWA services in an aspect of the disclosure. Here, data transfer, e.g., an IMS call, may be ongoing for first connection 110 to first network operator 151, and mobile communications device 100 may enter WLAN coverage. In step 1301, WLAN discovery may be performed and a WLAN access point may be detected. In step 1302, a data transfer request for second SIM 222 via second connection 120 may be requested. Connection manager 210 may determine if and / or when the data transfer of the first connection 110 may be interrupted, e.g., briefly suspended.

If the first connection 110 can be interrupted, connection manager 210 may forward the data transfer request for second connection 120 to CPS 122 to utilize the cellular radio technology in step 1304. An RRC connection to a base station of second operator network 152 may be established in step 1305, and in step 1306, connection manager 210 may determine if the base station configures WLAN measurement reports and determine if a LWA WLAN access point is available. If the access point is available, in step 1307, mobile communications device 100 may perform the WLAN measurement report and send it to the base station of second network operator 152. The RRC connection may be reconfigured for LWA in step 1308 between the CPS 122 and second network operator 152. The base station may then request LWA activation in step 1309, and connection manager 210 may establish the WLAN connection in step 1310 and in step 1311 sends a WLAN connection status to the second network operator 152. In addition, mobile communication device 100 configures uplink data split for only WLAN or requests the base station 101-2 to configure the uplink data split in this way. In any of steps 1304-1311, if LWA services are not possible for the second connection 120, connection manager 210 may determine which of first connection 110 and second connection 120 has a higher priority and select the connection with highest priority for communication over the cellular radio technology.

In step 1312, assuming the LWA connection for the second connection 120 is established, the cellular radio technology connection for first connection 110 may be resumed and the mobile communication device 100 may reconnect to base station 101-1 for data transfer of the first connection 110.

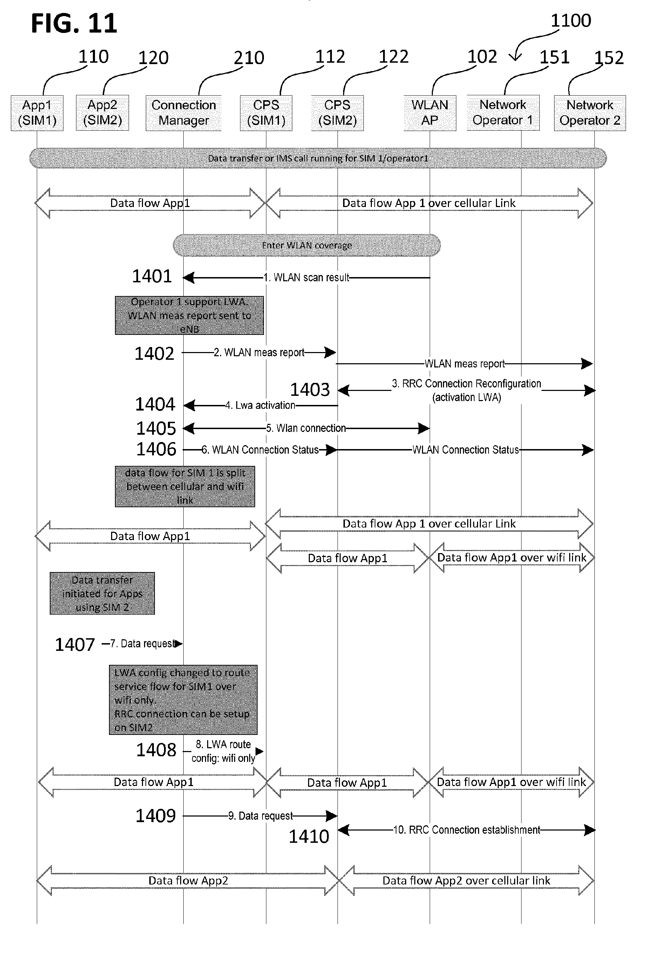

FIG. 11 shows a message sequence chart 1100 depicting LWA services in an aspect of the disclosure. In comparison to chart 1000, chart 1100 depicts first connection 110 in active LWA service when the second connection 120 is requested. Accordingly, first connection 110 may have an ongoing cellular radio technology transfer when mobile communications device enters WLAN coverage. Connection manager 210 may determine if an LWA WLAN access point is available and in steps 1402-1406 establish an active LWA service for first connection 110, for example, as described above in steps 1304-1311, however, the uplink data may be split between the cellular radio technology and WLAN at this time.

Subsequently, in step 1407, a data request for second connection 120 may be made. In step 1408, connection manager 210 may notify CPS 112 to adjust the active LWA bearer policy to have all uplink data sent over WLAN, e.g., if first receiver 204 has at least two receivers available, or to have both uplink and downlink data sent over WLAN, e.g., if first receiver 204 only has one receiver available.

As the cellular radio technology may now be available, second connection 120 may request CPS 122 to begin data transfer over the cellular radio technology, and in step 1410, an RRC connection to second network operator 152 may be established via the cellular radio technology and data transfer for second connection 120 may begin.

In addition, if connection manager 210 determines both first connection 110 and second connection 120 would be able to communicate via the LWA service, connection manager 210 may determine priority between the first connection 110 and second connection 120 based on the predetermined criteria and select which connection should use the cellular radio technology and which connection should use the LWA WLAN service. For example, the first connection 110 may be handed over to the cellular radio technology and the LWA service may be setup for second connection 120.

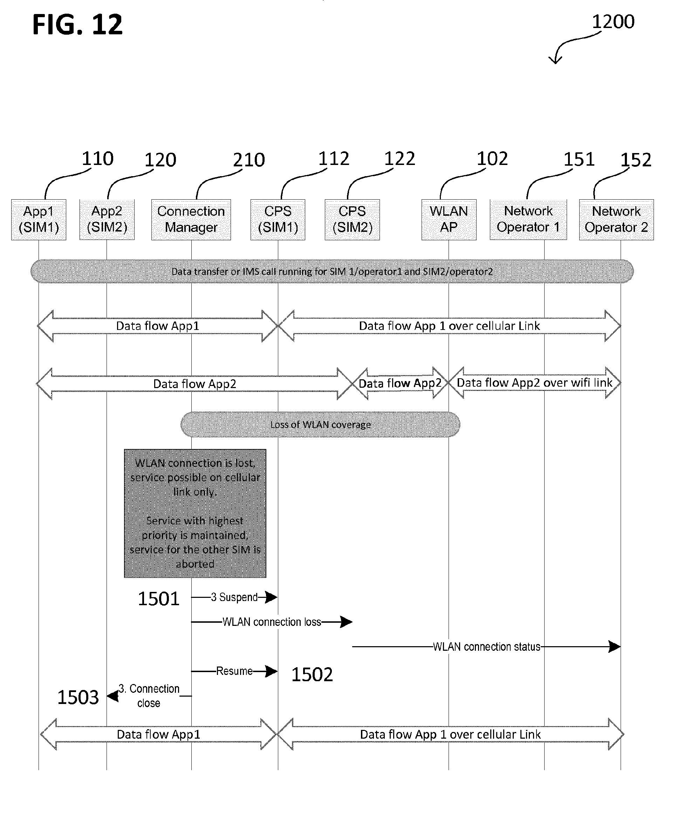

FIG. 12 shows a message sequence chart 1200 showing LWA services when WLAN becomes unavailable in an aspect of the disclosure. Here, data transfer for first connection 110 may be communicated over the cellular radio technology and data transfer for second connection 120 may be communicated over LWA services. During the data transfer, WLAN coverage may be lost or may be diminishing, e.g., mobile communications device 100 may move outside of a coverage area of a WLAN access point. Connection manager 210 may determine which of the first connection 110 or the second connection 120 may have the highest priority, and thus, maintain that connection, e.g., here, first connection 110 may be selected which is currently communicating over the cellular radio technology.

In step 1501, the first radio connection 110 on the cellular radio technology may be briefly suspended to allow second connection 120 to provide second network operator 152 with a WLAN connection status, e.g., that the connection has been lost. In step 1502, connection manager 210 may then resume the first connection 110 on the cellular radio technology, and in step 1503, connection manager 210 may close the second connection 120, while the first connection 110 transfers data over the cellular radio technology. If connection manager 210 determines the second connection 120 has higher priority than first connection 110 based on the predetermined criteria, the second connection 120 may be handed over to the cellular radio technology and the first connection 110 may be closed.
In an aspect of the disclosure, Example 1 is a method for controlling a connection manager, the method including: determining whether a first connection for a first subscriber identity module can be communicated over at least one of a first radio technology and a second radio technology, wherein the first radio technology is different from the second radio technology, and determining whether a second connection for a second subscriber identity module can be communicated over at least one of the first radio technology and the second radio technology; selecting one of the first radio technology or the second radio technology for transfer of data on the first connection based on the determinations for the first connection and the second connection; and selecting the other of the first radio technology or the second radio technology for transfer of data on the second connection based on the selection for the first connection.
Example 2 may include the method according to Example 1, wherein the first radio technology is one of a cellular radio communication technology and a short range radio technology.
Example 3 may include the method according to any one of Examples 1 and 2, wherein the second radio technology is one of a cellular radio communication technology and a short range radio technology.
Example 4 may include the method according to any one of Examples 1-3, wherein the first subscriber identity module is configured to operate in a first network and the second subscriber identity module is configured to operate in a second network.
Example 5 may include the method according to any one of Examples 1-4, wherein the first network is different from the second network.
Example 6 may include the method according to any one of Examples 1-5, further including: discovering a communications device of the second radio technology.
Example 7 may include the method according to Example 6, wherein the communications device is an access point (AP).
Example 8 may include the method according to Example 7, wherein the access point is a wireless local area network (WLAN) access point (AP).
Example 9 may include the method according to Example 6, wherein the communications device is a base station.
Example 10 may include the method according to Example 9, wherein the base station is configured to operate a cellular radio technology.
Example 11 may include the method according to any one of Examples 1-10, wherein the determination if the first connection for the first subscriber identity module can be communicated over at least one of the first radio technology and the second radio technology includes utilizing the first radio technology to determine if the second radio technology can be used to transfer the data of the first connection.
Example 12 may include the method according to Example 11, wherein the first radio technology determines if the first network is available on the second radio technology via a tunnel to a packet data network.
Example 13 may include the method according to Example 12, wherein the tunnel is an evolved packet data gateway (ePDG).
Example 14 may include the method according to any one of Examples 12 and 13, wherein the packet data network is an evolved packet core (EPC).
Example 15 may include the method according to any one of Examples 1-10, wherein the first radio technology determines if a wireless local area network (WLAN) access point (AP) supports simultaneous utilization of the first radio technology and the second radio technology.
Example 16 may include the method according to Example 15, wherein control information is communicated over the first radio technology and data is communicated over at least one of the first radio technology and the second radio technology.
Example 17 may include the method according to any one of Examples 15 and 16, wherein the data is communicated only over the second radio technology.
Example 18 may include the method according to any one of Examples 15-17, further including: sending a command the data for the first connection or the second connection is communicated only over the second radio technology.
Example 19 may include the method according to any one of Examples 15-18, wherein the simultaneous utilization of the first radio technology and the second radio technology is long term evolution wireless local area network aggregation (LWA).
Example 20 may include the method according to any one of Examples 15-18, wherein the simultaneous utilization of the first radio technology and the second radio technology is enhanced long term evolution wireless local area network aggregation (eLWA).
Example 21 may include the method according to any one of Examples 1-10, wherein the determination if the second connection for the second subscriber identity module can be communicated over at least one of the first radio technology and the second radio technology includes utilizing the first radio technology to determine if the second radio technology can be used to transfer the data of the second connection.
Example 22 may include the method according to Example 21, wherein the first radio technology determines if the first network is available on the second radio technology via a tunnel to a packet data network.
Example 23 may include the method according to Example 22, wherein the tunnel is an evolved packet data gateway (ePDG).
Example 24 may include the method according to any one of Examples 22 and 23, wherein the packet data network is an evolved packet core (EPC).
Example 25 may include the method according to any one of Examples 1-24, wherein selection of one of the first radio technology or the second radio technology for transfer of data on the first connection is based on a predetermined criteria determining priority between the first connection and the second connection.
Example 26 may include the method according to any one of Examples 1-25, wherein the first connection can be communicated over only one of the first radio technology and the second radio technology
Example 27 may include the method according to any one of Examples 1-26, wherein the second connection can be communicated over only one of the first radio technology and the second radio technology.
Example 28 may include the method according to any one of Examples 1-27, further including: selecting one of the first connection or the second connection to transfer the data on the first radio technology based on a predetermined criteria determining if the first connection and the second connection can only be communicated over the same radio technology of the first radio technology and the second radio technology.
Example 29 may include the method according to any one of Examples 25 or 28, wherein the predetermined criteria is at least one of: an application source of the first connection or the second connection, a service type of the first connection or the second connection, a signal quality, a Quality of Service (QoS), a user preference, and a network operator preference.
Example 30 may include the method according to Example 29, wherein the Quality of Service may be based on at least one of: a guaranteed bit rate and a connection establishment delay.
Example 31 may include the method according to any one of Examples 1-30, wherein selection of the one of the first radio technology or the second radio technology for the transfer of the data on the first connection includes a handover of the first connection from the first radio technology to the second radio technology.
Example 32 may include the method according to any one of Examples 1-15-and 20-30, wherein selection of the other of the first radio technology or the second radio technology for the transfer of the data on the second connection includes a handover of the second connection from the first radio technology to the second radio technology.
Example 33 may include the method according to any one of Examples 31 and 32, wherein the handover offloads a packet data network (PDN) gateway connection from the first radio technology to the second radio technology.
Example 34 may include the method according to any one of Examples 1-10 and 15-30, wherein the selection of the respective radio technologies for the first connection and the second connection further include: suspending the first connection on the first radio technology until the second connection is setup on the second radio technology via the first radio technology.
Example 35 may include the method according to any one of Examples 1-10, 15-30 and 34, wherein the selection of the respective radio technologies for the first connection and the second connection further include: suspending periodically the first connection to allow the second connection to perform control signaling for the second radio technology via the first radio technology.
Example 36 may include the method according to Example 35, wherein control signaling includes: information regarding at least one of connection establishment, connection release, system information, radio bearer information, paging notification, and transceiver power control.
Example 37 may include the method according to any one of Examples 1-36, further including: selecting one of the first connection or the second connection for the transfer of the data via the first radio technology if the second radio technology becomes unavailable after selection of radio technologies for each of the first connection and the second connection.
Example 38 may include the method according to Example 37, wherein selecting the first connection or the second connection when the second radio technology becomes unavailable includes a handover of the first connection or the second connection to the first radio technology.
Example 39 may include the method according to Examples 38, wherein selection of the one of the first connection or the second connection if the second radio technology becomes unavailable is based on the predetermined criteria determining priority between the first connection and the second connection.
Example 40 may include the method according to Example 39, wherein the predetermined criteria is at least one of: an application source of the first connection or the second connection, a service type of the first connection or the second connection, a signal quality, a Quality of Service (QoS), a user preference, and a network operator preference.
Example 41 may include the method according to Example 40, wherein the Quality of Service may be based on at least one of: a guaranteed bit rate and a connection establishment delay.
Example 42 may include the method according to any one of Examples 1-41, further including: storing a location in a memory where the first connection can be communicated over the first radio technology and the second radio technology.
Example 43 may include the method according to Example 42, wherein the location is based on at least one of a geographical location determined by a positioning system, a base station identifier, and an access point identifier.
In an aspect of the disclosure, Example 44 may be a non-transitory computer readable medium having computer executable instructions that cause a processing circuit to perform the method according to any one of Examples 1-43.
In an aspect of the disclosure, Example 45 may be a connection manager configured to perform the method according to any one of Examples 1-43.
In an aspect of the disclosure, Example 46 may be a mobile communications device including the connection manager according to Example 45.
Example 47 may include the mobile communications device of Example 46, further including: the first subscriber identity module; the second subscriber identity module; a first transceiver configured to operate the first radio technology; and a second transceiver configured to operate the second radio technology; and wherein the first transceiver is configured to receive the first connection for the first subscriber identity module and also the second connection for the second subscriber identity module.
In an aspect of the disclosure, Example 48 is a mobile radio communications device including: a first subscriber identity module; a second subscriber identity module; a first transceiver configured to operate a first radio technology; a second transceiver configured to operate a second radio technology; wherein the first radio technology is different from the second wireless radio technology; wherein the first transceiver is configured to receive a first connection for the first subscriber identity module and also a second connection for the second subscriber identity module; and a connection manager configured to: determine whether the first connection can be communicated over at least one of the first radio technology and the second radio technology and determine whether the second connection can be communicated over at least one of the first radio technology and the second radio technology, select one of the first radio technology or the second radio technology for transfer of data on the first connection based on the determinations for the first connection and the second connection, and select the other of the first radio technology or the second radio technology for transfer of data on the second connection based on the selection for the first connection.
Example 49 may include the mobile communications device according to Example 48, wherein the mobile radio communications device includes at least one further transceiver configured to operate at least one further radio technology.
Example 50 may include the mobile communications device according to Example 49, wherein the first transceiver includes at least two receivers.
Example 51 may include the mobile communications device according to any one of Examples 48-50, wherein the first radio technology is one of a cellular radio communication technology and a short range radio technology.
Example 52 may include the mobile communications device according to any one of Examples 48-51, wherein the second radio technology is one of a cellular radio communication technology and a short range radio technology.
Example 53 may include the mobile communications device according to any one of Examples 48-52, wherein the first subscriber identity module is configured to operate in a first network and the second subscriber identity module is configured to operate in a second network.
Example 54 may include the mobile communications device according to Example 53, wherein the first network is different from the second network.
Example 55 may include the mobile communications device according to any one of Examples 48-54, wherein the second transceiver has an established connection with a communications device of the second radio technology.
Example 56 may include the mobile communications device according to Example 55, wherein the communications device is an access point (AP).
Example 57 may include the mobile communications device according to Example 56, wherein the access point is a wireless local area network (WLAN) access point (AP).
Example 58 may include the mobile communications device according to Example 55, wherein the communications device is a base station.
Example 59 may include the mobile communications device according to Example 58, wherein the base station is configured to operate a cellular radio technology.
Example 60 may include the mobile communications device according to any one of Examples 48-59, wherein the determination if the first connection for the first subscriber identity module can be communicated over at least one of the first radio technology and the second radio technology includes utilizing the first radio technology to determine if the second radio technology can be used to transfer the data of the first connection.
Example 61 may include the mobile communications device according to Example 60, wherein the first radio technology determines if the first network is available on the second radio technology via a tunnel to a packet data network.
Example 62 may include the mobile communications device according to Example 61, wherein the tunnel is an evolved packet data gateway (ePDG).
Example 63 may include the mobile communications device according to Example 62, wherein the packet data network is an evolved packet core (EPC).
Example 64 may include the mobile communications device according to any one of Examples 48-59, wherein the first radio technology determines if a wireless local area network (WLAN) access point (AP) supports simultaneous utilization of the first radio technology and the second radio technology.
Example 65 may include the mobile communications device according to Example 64, wherein control information is communicated over the first radio technology and data is communicated over at least one of the first radio technology and the second radio technology.
Example 66 may include the mobile communications device according to Example 65, wherein the data is communicated only over the second radio technology.
Example 67 may include the mobile communications device according to any one of Examples 64-66, wherein the connection manager is further configured to: send a command the data for the first connection or the second connection is communicated only over the second radio technology.
Example 68 may include the mobile communications device according to any one of Examples 64-67, wherein the simultaneous utilization of the first radio technology and the second radio technology is long term evolution wireless local area network aggregation (LWA).
Example 69 may include the mobile communications device according to any one of Examples 64-67, wherein the simultaneous utilization of the first radio technology and the second radio technology is enhanced long term evolution wireless local area network aggregation (eLWA).
Example 70 may include the mobile communications device according to any one of Examples 48-63, wherein the determination if the second connection for the second subscriber identity module can be communicated over at least one of the first radio technology and the second radio technology includes utilizing the first radio technology to determine if the second radio technology can be used to transfer the data of the second connection.
Example 71 may include the mobile communications device according to Example 70, wherein the first radio technology determines if the first network is available on the second radio technology via a tunnel to a packet data network.
Example 72 may include the mobile communications device according to Example 71, wherein the tunnel is an evolved packet data gateway (ePDG).
Example 73 may include the mobile communications device according to Example 71, wherein the packet data network is an evolved packet core (EPC).
Example 74 may include the mobile communications device according to any one of Examples 48-73, wherein selection of one of the first radio technology or the second radio technology for transfer of data on the first connection is based on a predetermined criteria determining priority between the first connection and the second connection.
Example 75 may include the mobile communications device according to Example 74, wherein the first connection can be communicated over only one of the first radio technology and the second radio technology.
Example 76 may include the mobile communications device according to any one of Examples 74 and 75, wherein the second connection can be communicated over only one of the first radio technology and the second radio technology.
Example 77 may include the mobile communications device according to any one of Examples 48-76, wherein the connection managers is further configured to: select one of the first connection or the second connection to transfer the data on the first radio technology based on a predetermined criteria determining if the first connection and the second connection can only be communicated over the same radio technology of the first radio technology and the second radio technology.
Example 78 may include the mobile communications device according to any one of Examples 74 and 77, wherein the predetermined criteria is at least one of: an application source of the first connection or the second connection, a service type of the first connection or the second connection, a signal quality, a Quality of Service (QoS), a user preference, and a network operator preference.
Example 79 may include the mobile communications device according to Example 78, wherein the Quality of Service may be based on at least one of: a guaranteed bit rate and a connection establishment delay.
Example 80 may include the mobile communications device according to any one of Examples 48-79, wherein selection of the one of the first radio technology or the second radio technology for the transfer of the data on the first connection includes a handover of the first connection from the first radio technology to the second radio technology.
Example 81 may include the mobile communications device according to any one of Examples 48-80, wherein selection of the other of the first radio technology or the second radio technology for the transfer of the data on the second connection includes a handover of the second connection from the first radio technology to the second radio technology.
Example 82 may include the mobile communications device according to Example 81, wherein the handover offloads a packet data network (PDN) gateway connection from the first radio technology to the second radio technology.
Example 83 may include the mobile communications device according to any one of Example 48-63 and 70-81, wherein the selection of the respective radio technologies for the first connection and the second connection further includes: suspending the first connection on the first radio technology until the second connection is setup on the second radio technology via the first radio technology.
Example 84 may include the mobile communications device according to any one of Examples 48-63, 70-81, and 83, wherein the selection of the respective radio technologies for the first connection and the second connection further includes: suspending periodically the first connection to allow the second connection to perform control signaling for the second radio technology via the first radio technology.
Example 85 may include the mobile communications device according to Example 84, wherein the control signaling includes: information regarding at least one of connection establishment, connection release, system information, radio bearer information, paging notification, and transceiver power control.
Example 86 may include the mobile communications device according to any one of Examples 48-85, wherein the connection manager is further configured to: select one of the first connection or the second connection for the transfer of the data via the first radio technology if the second radio technology becomes unavailable after selection of radio technologies for each of the first connection and the second connection.
Example 87 may include the mobile communications device according to Example 86, wherein selecting the first connection or the second connection when the second radio technology becomes unavailable includes a handover of the first connection or the second connection to the first radio technology.
Example 88 may include the mobile communications device according to any one of Examples 86 and 87, wherein selection of the one of the first connection or the second connection if the second radio technology becomes unavailable is based on the predetermined criteria determining priority between the first connection and the second connection.
Example 89 may include the mobile communications device according to Example 88, wherein the predetermined criteria is at least one of: an application source of the first connection or the second connection, a service type of the first connection or the second connection, a signal quality, a Quality of Service (QoS), a user preference, and a network operator preference.
Example 90 may include the mobile communications device according to Example 89, wherein the Quality of Service may be based on at least one of: a guaranteed bit rate and a connection establishment delay.
Example 91 may include the mobile communications device according to any one of Examples 48-90, wherein the connection manager is further configured to: store a location in a memory where the first connection can be communicated over the first radio technology and the second radio technology.
Example 92 may include the mobile communications device according to Example 91, wherein the location is based on at least one of a geographical location determined by a positioning system, a base station identifier, and an access point identifier.
In an aspect of the disclosure, Example 93 may be a connection manager configured to perform a method, the method including: determining whether a first connection for a first subscriber identity module can be communicated over at least one of a first radio technology and a second radio technology, wherein the first radio technology is different from the second radio technology, and determining whether a second connection for a second subscriber identity module can be communicated over at least one of the first radio technology and the second radio technology; selecting one of the first radio technology or the second radio technology for transfer of data on the first connection based on the determinations for the first connection and the second connection; and selecting the other of the first radio technology or the second radio technology for transfer of data on the second connection based on the selection for the first connection.
Example 94 may include the method according to Example 93, wherein the first radio technology is one of a cellular radio communication technology and a short range radio technology.
Example 95 may include the method according to any one of Examples 93 and 94, wherein the second radio technology is one of a cellular radio communication technology and a short range radio technology.
Example 96 may include the method according to any one of Examples 93-95, wherein the first subscriber identity module is configured to operate in a first network and the second subscriber identity module is configured to operate in a second network.
Example 97 may include the method according to Example 96, wherein the first network is different from the second network.
Example 98 may include the method according to any one of Examples 93-97, further including: discovering a communications device of the second radio technology.
Example 99 may include the method according to Example 98, wherein the communications device is an access point (AP).
Example 100 may include the method according to Example 99, wherein the access point is a wireless local area network (WLAN) access point (AP).
Example 101 may include the method according to Example 98, wherein the communications device is a base station.
Example 102 may include the method according to Example 101, wherein the base station is configured to operate a cellular radio technology.
Example 103 may include the method according to any one of Examples 93-102, wherein the determination if the first connection for the first subscriber identity module can be communicated over at least one of the first radio technology and the second radio technology includes utilizing the first radio technology to determine if the second radio technology can be used to transfer the data of the first connection.
Example 104 may include the method according to Example 103, wherein the first radio technology determines if the first network is available on the second radio technology via a tunnel to a packet data network.
Example 105 may include the method according to Example 104, wherein the tunnel is an evolved packet data gateway (ePDG).
Example 106 may include the method according to any one of Examples 104 and 105, wherein the packet data network is an evolved packet core (EPC).
Example 107 may include the method according to Example 103, wherein the first radio technology determines if a wireless local area network (WLAN) access point (AP) supports simultaneous utilization of the first radio technology and the second radio technology.
Example 108 may include the method according to Example 107, wherein control information is communicated over the first radio technology and data is communicated over at least one of the first radio technology and the second radio technology.
Example 109 may include the method according to Example 108, wherein the data is communicated only over the second radio technology.
Example 110 may include the method according to any one of Examples 107-109, further including: sending a command the data for the first connection or the second connection is communicated only over the second radio technology.
Example 111 may include the method according to any one of Examples 107-110, wherein the simultaneous utilization of the first radio technology and the second radio technology is long term evolution wireless local area network aggregation (LWA).
Example 112 may include the method according to any one of Examples 107-110, wherein the simultaneous utilization of the first radio technology and the second radio technology is enhanced long term evolution wireless local area network aggregation (eLWA).
Example 113 may include the method according to any one of Examples 93-107, wherein the determination if the second connection for the second subscriber identity module can be communicated over at least one of the first radio technology and the second radio technology includes utilizing the first radio technology to determine if the second radio technology can be used to transfer the data of the second connection.
Example 114 may include the method according to Example 113, wherein the first radio technology determines if the first network is available on the second radio technology via a tunnel to a packet data network.
Example 115 may include the method according to Example 114, wherein the tunnel is an evolved packet data gateway (ePDG).
Example 116 may include the method according to any one of Examples 114 and 115, wherein the packet data network is an evolved packet core (EPC).
Example 117 may include the method according to any one of Examples 93-116, wherein selection of one of the first radio technology or the second radio technology for transfer of data on the first connection is based on a predetermined criteria determining priority between the first connection and the second connection.
Example 118 may include the method according to any one of Examples 93-117, wherein the first connection can be communicated over only one of the first radio technology and the second radio technology.
Example 119 may include the method according to any one of Examples 93-118, wherein the second connection can be communicated over only one of the first radio technology and the second radio technology.
Example 120 may include the method according to any one of Examples 93-119, further including: selecting one of the first connection or the second connection to transfer the data on the first radio technology based on a predetermined criteria determining if the first connection and the second connection can only be communicated over the same radio technology of the first radio technology and the second radio technology.
Example 121 may include the method according to any one of Examples 117 and 120, wherein the predetermined criteria is at least one of: an application source of the first connection or the second connection, a service type of the first connection or the second connection, a signal quality, a Quality of Service (QoS), a user preference, and a network operator preference.
Example 122 may include the method according to Example 121, wherein the Quality of Service may be based on at least one of: a guaranteed bit rate and a connection establishment delay.
Example 123 may include the method according to any one of Examples 93-122, wherein selection of the one of the first radio technology or the second radio technology for the transfer of the data on the first connection includes a handover of the first connection from the first radio technology to the second radio technology.
Example 124 may include the method according to any one of Examples 93-123, wherein selection of the other of the first radio technology or the second radio technology for the transfer of the data on the second connection includes a handover of the second connection from the first radio technology to the second radio technology.
Example 125 may include the method according to any one of Examples 123 and 124, wherein the handover offloads a packet data network (PDN) gateway connection from the first radio technology to the second radio technology.
Example 126 may include the method according to any one of Examples 93-106 and 113-124, wherein the selection of the respective radio technologies for the first connection and the second connection further include: suspending the first connection on the first radio technology until the second connection is setup on the second radio technology via the first radio technology.
Example 127 may include the method according to any one of Examples 93-106, 113-124 and 126, wherein the selection of the respective radio technologies for the first connection and the second connection further include: suspending periodically the first connection to allow the second connection to perform control signaling for the second radio technology via the first radio technology.
Example 128 may include the method according to Example 127, wherein control signaling includes: information regarding at least one of connection establishment, connection release, system information, radio bearer information, paging notification, and transceiver power control.
Example 129 may include the method according to any one of Examples 93-126, the method further including: selecting one of the first connection or the second connection for the transfer of the data via the first radio technology if the second radio technology becomes unavailable after selection of radio technologies for each of the first connection and the second connection.
Example 130 may include the method according to Example 127, wherein selecting the first connection or the second connection when the second radio technology becomes unavailable includes a handover of the first connection or the second connection to the first radio technology.
Example 131 may include the method according to Example 127, wherein selection of the one of the first connection or the second connection if the second radio technology becomes unavailable is based on the predetermined criteria determining priority between the first connection and the second connection.
Example 132 may include the method according to Example 131, wherein the predetermined criteria is at least one of: an application source of the first connection or the second connection, a service type of the first connection or the second connection, a signal quality, a Quality of Service (QoS), a user preference, and a network operator preference.
Example 133 may include the method according to Example 130, wherein the Quality of Service may be based on at least one of: a guaranteed bit rate and a connection establishment delay.
Example 134 may include the method according to any one of Examples 93-133, further including: storing a location in a memory where the first connection can be communicated over the first radio technology and the second radio technology.
Example 135 may include the method according to Example 134, wherein the location is based on at least one of a geographical location determined by a positioning system, a base station identifier, and an access point identifier.
In an aspect of the disclosure, Example 136 may be a mobile communications device including the connection management circuit according to any one of Examples 93-135.
Example 137 may include the mobile communications device of Example 136, further including: the first subscriber identity module; the second subscriber identity module; a first transceiver configured to operate the first radio technology; and a second transceiver configured to operate the second radio technology; and wherein the first transceiver is configured to receive the first connection for the first subscriber identity module and also the second connection for the second subscriber identity module.
In an aspect of the disclosure, Example 138 may be a non-transitory computer readable medium having computer executable instructions that cause a processing circuit to perform a method, the method including: determining if a first connection for a first subscriber identity module can be communicated over at least one of a first radio technology and a second radio technology, wherein the first radio technology is different from the second radio technology, and determining if a second connection for a second subscriber identity module can be communicated over at least one of the first radio technology and the second radio technology; selecting one of the first radio technology or the second radio technology for transfer of data on the first connection based on the determinations for the first connection and the second connection; and selecting the other of the first radio technology or the second radio technology for transfer of data on the second connection based on the selection for the first connection.
Example 139 may include the method according to Example 138, wherein the first radio technology is one of a cellular radio communication technology and a short range radio technology.
Example 140 may include the method according to any one of Examples 138 and 139, wherein the second radio technology is one of a cellular radio communication technology and a short range radio technology.
Example 141 may include the method according to any one of Examples 138-140, wherein the first subscriber identity module is configured to operate in a first network and the second subscriber identity module is configured to operate in a second network.
Example 142 may include the method according to Example 141, wherein the first network is different from the second network.
Example 143 may include the method according to any one of Examples 138-142, further including: discovering a communications device of the second radio technology.
Example 144 may include the method according to Example 143, wherein the communications device is an access point (AP).
Example 145 may include the method according to Example 144, wherein the access point is a wireless local area network (WLAN) access point (AP).
Example 146 may include the method according to Example 143, wherein the communications device is a base station.
Example 147 may include the method according to Example 146, wherein the base station is configured to operate a cellular radio technology.
Example 148 may include the method according to any one of Examples 138-147, wherein the determination if the first connection for the first subscriber identity module can be communicated over at least one of the first radio technology and the second radio technology includes utilizing the first radio technology to determine if the second radio technology can be used to transfer the data of the first connection.
Example 149 may include the method according to Example 148, wherein the first radio technology determines if the first network is available on the second radio technology via a tunnel to a packet data network.
Example 150 may include the method according to Example 149, wherein the tunnel is an evolved packet data gateway (ePDG).
Example 151 may include the method according to any one of Examples 149 and 150, wherein the packet data network is an evolved packet core (EPC).
Example 152 may include the method according to Example 148, wherein the first radio technology determines if a wireless local area network (WLAN) access point (AP) supports simultaneous utilization of the first radio technology and the second radio technology.
Example 153 may include the method according to Example 152, wherein control information is communicated over the first radio technology and data is communicated over at least one of the first radio technology and the second radio technology.
Example 154 may include the method according to Example 153, wherein the data is communicated only over the second radio technology.
Example 155 may include the method according to any one of Examples 152-154, further including: sending a command the data for the first connection or the second connection is communicated only over the second radio technology.
Example 156 may include the method according to any one of Examples 153-155, wherein the simultaneous utilization of the first radio technology and the second radio technology is long term evolution wireless local area network aggregation (LWA).
Example 157 may include the method according to any one of Examples 152-155, wherein the simultaneous utilization of the first radio technology and the second radio technology is enhanced long term evolution wireless local area network aggregation (eLWA).
Example 158 may include the method according to any one of Examples 138-152, wherein the determination if the second connection for the second subscriber identity module can be communicated over at least one of the first radio technology and the second radio technology includes utilizing the first radio technology to determine if the second radio technology can be used to transfer the data of the second connection.
Example 159 may include the method according to Example 158, wherein the first radio technology determines if the first network is available on the second radio technology via a tunnel to a packet data network.
Example 160 may include the method according to Example 159, wherein the tunnel is an evolved packet data gateway (ePDG).
Example 161 may include the method according to any one of Examples 159 and 160, wherein the packet data network is an evolved packet core (EPC).
Example 162 may include the method according to any one of Examples 138-161, wherein selection of one of the first radio technology or the second radio technology for transfer of data on the first connection is based on a predetermined criteria determining priority between the first connection and the second connection.
Example 163 may include the method according to any one of Examples 138-162, wherein the first connection can be communicated over only one of the first radio technology and the second radio technology.
Example 164 may include the method according to any one of Examples 138-118, wherein the second connection can be communicated over only one of the first radio technology and the second radio technology.
Example 165 may include the method according to any one of Examples 138-164, further including: selecting one of the first connection or the second connection to transfer the data on the first radio technology based on a predetermined criteria determining if the first connection and the second connection can only be communicated over the same radio technology of the first radio technology and the second radio technology.
Example 166 may include the method according to any one of Examples 162 and 165, wherein the predetermined criteria is at least one of: an application source of the first connection or the second connection, a service type of the first connection or the second connection, a signal quality, a Quality of Service (QoS), a user preference, and a network operator preference.
Example 167 may include the method according to Example 166, wherein the Quality of Service may be based on at least one of: a guaranteed bit rate and a connection establishment delay.
Example 168 may include the method according to any one of Examples 138-167, wherein selection of the one of the first radio technology or the second radio technology for the transfer of the data on the first connection includes a handover of the first connection from the first radio technology to the second radio technology.
Example 169 may include the method according to any one of Examples 138-168, wherein selection of the other of the first radio technology or the second radio technology for the transfer of the data on the second connection includes a handover of the second connection from the first radio technology to the second radio technology.
Example 170 may include the method according to any one of Examples 168 and 169, wherein the handover offloads a packet data network (PDN) gateway connection from the first radio technology to the second radio technology.
Example 171 may include the method according to any one of Examples 138-151 and 158-169, wherein the selection of the respective radio technologies for the first connection and the second connection further include: suspending the first connection on the first radio technology until the second connection is setup on the second radio technology via the first radio technology.
Example 172 may include the method according to any one of Examples 138-151, 158-169 and 171, wherein the selection of the respective radio technologies for the first connection and the second connection further include: suspending periodically the first connection to allow the second connection to perform control signaling for the second radio technology via the first radio technology.
Example 173 may include the method according to Example 172, wherein control signaling includes: information regarding at least one of connection establishment, connection release, system information, radio bearer information, paging notification, and transceiver power control.
Example 174 may include the method according to any one of Examples 138-171, the method further including: selecting one of the first connection or the second connection for the transfer of the data via the first radio technology if the second radio technology becomes unavailable after selection of radio technologies for each of the first connection and the second connection.
Example 175 may include the method according to Example 174, wherein selecting the first connection or the second connection when the second radio technology becomes unavailable includes a handover of the first connection or the second connection to the first radio technology.
Example 176 may include the method according to Example 174, wherein selection of the one of the first connection or the second connection if the second radio technology becomes unavailable is based on the predetermined criteria determining priority between the first connection and the second connection.
Example 177 may include the method according to Example 176, wherein the predetermined criteria is at least one of: an application source of the first connection or the second connection, a service type of the first connection or the second connection, a signal quality, a Quality of Service (QoS), a user preference, and a network operator preference.
Example 178 may include the method according to Example 177, wherein the Quality of Service may be based on at least one of: a guaranteed bit rate and a connection establishment delay.
Example 179 may include the method according to any one of Examples 138-178, further including: storing a location in a memory where the first connection can be communicated over the first radio technology and the second radio technology.
Example 180 may include the method according to Example 179, wherein the location is based on at least one of a geographical location determined by a positioning system, a base station identifier, and an access point identifier.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims, and all changes within the meaning and range of equivalency of the claims are therefore intended to be embraced.

## Claims

1. A method for controlling a connection manager, the method comprising:
determining whether a first connection for a first subscriber identity module can be communicated over at least one of a first radio technology and a second radio technology, wherein the first radio technology is different from the second radio technology, and
determining whether a second connection for a second subscriber identity module can be communicated over at least one of the first radio technology and the second radio technology;
selecting one of the first radio technology or the second radio technology for transfer of data on the first connection based on the determinations for the first connection and the second connection; and
selecting the other of the first radio technology or the second radio technology for transfer of data on the second connection.

2. The method according to Claim 1,
wherein selection of one of the first radio technology or the second radio technology for transfer of data on the first connection is based on a predetermined criteria determining priority between the first connection and the second connection.

3. The method according to Claim 2,
wherein the predetermined criteria is at least one of: an application source of the first connection or the second connection, a signal quality, a Quality of Service (QoS), a user preference, and a network operator preference.

4. The method according to any one of Claims 1-3,
wherein the first radio technology is one of a cellular radio communication technology and a short range radio technology.

5. The method according to any one of Claims 1-4,
wherein the second radio technology is one of a cellular radio communication technology and a short range radio technology.

6. The method according to any one of Claims 1-5,
wherein the first subscriber identity module is configured to operate in a first network and the second subscriber identity module is configured to operate in a second network.

7. The method according to Claim 6,
wherein the first network is different from the second network.

8. The method according to any one of Claims 1-7,
wherein selection of the one of the first radio technology or the second radio technology for the transfer of the data on the first connection comprises a handover of the first connection from the first radio technology to the second radio technology.

9. The method according to any one of Claims 1-7,
wherein selection of the other of the first radio technology or the second radio technology for the transfer of the data on the second connection comprises a handover of the second connection from the first radio technology to the second radio technology.

10. The method according to any one of Claims 1-9, the method further comprising:
selecting one of the first connection or the second connection for the transfer of the data via the first radio technology if the second radio technology becomes unavailable after selection of radio technologies for each of the first connection and the second connection.

11. The method of Claim 10,
wherein selecting the first connection or the second connection when the second radio technology becomes unavailable comprises a handover of the first connection or the second connection to the first radio technology.

12. A non-transitory computer readable medium having computer executable instructions that cause a processing circuit to perform the method according to any one of Claims 1-11.

13. A connection manager configured to perform the method according to any one of Claims 1-11.

14. A mobile communications device comprising the connection management circuit according to Claim 13.

15. The mobile communications device of Claim 14, further comprising:
the first subscriber identity module;
the second subscriber identity module;
a first transceiver configured to operate the first wireless radio technology; and
a second transceiver configured to operate the second wireless radio technology; and
wherein the first transceiver is configured to receive the first connection for the first subscriber identity module and also the second connection for the second subscriber identity module.
